# EUROPEAN PATENT APPLICATION

(11) **EP 4 741 360 A1**
(43) Date of publication of application: **13.05.2026**
(21) Application number: 24211253.0
(22) Date of filing: 06.11.2024
(51) Int. Cl.: C04B 7/43, C04B 20/02, C04B 28/02

(54) **METHOD FOR THE MANUFACTURE OF LOW-CARBON-FOOTPRINT CEMENT**

(71) Applicant: Carbon Upcycling Technologies Inc., Calgary, AB T2P 3N9 (CA)
(72) Inventor: Sinha, Apoorva, Calgary, T2P 3N9 (CA)
(74) Representative: Lakeside IP

(57) **Abstract**

The present invention relates to methods for integrating CO₂-mediated mineral carbonation and/or activation in a cement production facility and methods for producing low-carbon-footprint cement, comprising withdrawing at least part of the exhaust gas generated cement production, conditioning it by modifying one or more of temperature, pressure, CO₂ concentration and humidity, subjecting an activatable solid feedstock to a size-reduction operation in a size-reduction apparatus distinct from the raw mill and cement mill, and producing low-carbon-footprint cement by mixing the CO₂-activated material with the cement wherein mixing is performed feeding the CO₂-activated material to the cement mill or a distinct mixing apparatus.

## Description

### Field of the invention

The present invention relates to methods for integrating CO₂-mediated mineral carbonation and/or activation in a cement production facility and methods for producing low-carbon-footprint cement.

### Background of the invention

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are typically called supplementary cementitious materials and are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for CO₂ emissions in the cement industry are not sufficient to ensure the necessary mitigation in a scenario of increasing cement demand. Currently, cement production is increasing due to a combination of increasing urbanization and replacement of old infrastructure.

In an attempt to mitigate their CO₂-emissions, some cement plants have started integrating carbon-capture solutions into their production.

WO2011/015207A1 and WO2023/203072 describe different ways of integrating the calcium cycle into a cement production facility.

WO2019/115722A1 describes flushing a stockpile or silo containing recycled concrete fines with exhaust gas of a cement production facility to clean it.

WO2022/123471A1 describes introducing a carbonatable substance from an external source in the exhaust gas installation of a cement production facility.

More recently, technological advances have made it possible to produce cement filler materials which are CO₂-activated, such that they function as supplementary cementitious material (instead of merely being a largely inert filler). Such materials allow large cement replacement levels to be achieved. In case carbonatable materials are activated they may thus advantageously combine the primary emissions abatement from the carbon dioxide sequestered during their activation process with large secondary emissions abatement from the large cement replacement levels. Such materials are described in amongst others EP4054990B1, EP4324805B1, EP4324803B1, EP4324802B1, and US2024199485A1. By blending these materials with traditional cement, low-carbon-footprint cement can be obtained.

There is a need for improved methods of integrating a carbonation stage in a cement production facility, in particular there is a need for methods which allow integration of carbonation processes or CO₂-mediated activation processes with lead to the production of highly active SCMs, and have limited impact on regular cement plant operations and capacity.

It is an object of the present invention to provide methods for integrating CO₂-mediated mineral carbonation and/or activation in a cement production facility.

It is an object of the present invention to provide methods for producing low-carbon-footprint cement.

### Summary of the invention

In a first aspect of the invention there is provided a method for the manufacture of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material;
(vii) producing low-carbon-footprint cement by mixing the first and/or second CO₂-activated material with the cement of step (iii), wherein mixing is performed
   (a) by feeding the first and/or second CO₂-activated material to the second size-reduction apparatus of step (iii) while step (iii) is being performed; and/or
   (b) by mixing the first and/or second CO₂-activated material with the cement obtained in step (iii) in a mixing apparatus different from the first, second and third size-reduction apparatus.

The invention is especially relevant for retrofitting existing cement plants. The invention is especially suitable for the continuous manufacture of low-carbon footprint cement. Hence in preferred embodiments of the invention it is preferably for the manufacture, preferably for the continuous manufacture, of low-carbon footprint cement.

In preferred embodiments of the invention, the D90 of the first and/or second CO₂-activated material before the mixing of step (vii) is within the range of 0.5 to 120 µm, preferably within the range of 5 to 100 µm, more preferably within the range of 10-85 µm. By preparing the CO₂-activated material to such a fine size in the third size-reduction apparatus (typically a mill), the size-reduction conditions can be optimized to the activatable feedstock and the second size-reduction apparatus capacity can be optimized as it only has to perform mixing of the activated material, not grinding.

The conditioned exhaust gas used in step (v) preferably has
- a temperature within the range of 30-180°C, preferably within the range of 35-120 °C, most preferably within the range of 40-85 °C;
- a relative humidity of at least 40%, preferably at least 60%, more preferably at least 70%; and/or
- a CO₂ concentration within the range of 0.5-50 vol%, preferably 2-40 vol%, more preferably 5-35 vol%.

The production of ternary, quaternary or more cement blends is facilitated by certain embodiments of the method of the invention. For example, in some embodiments of the invention there is provided a method for the manufacture of low-carbon-footprint cement which comprises the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the conditioned exhaust gas, thereby obtaining a third CO₂-activated material, and recovering the third CO₂-activated material;
(vi)
   (a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
   (b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(vii) producing low-carbon-footprint cement by mixing
   - the first and/or second CO₂-activated material;
   - the third and/or fourth CO₂-activated material; and
   - the cement of step (iii);
   wherein mixing is performed
   (a) by feeding the CO₂-activated materials to the second size-reduction apparatus of step (iii) while step (iii) is being performed; and/or
   (b) by mixing the CO₂-activated materials with the cement obtained in step (iii) in a mixing apparatus different from the first, second, third and fourth size-reduction apparatus.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

The term "Low-carbon-footprint cement" is used herein to refer to the cementitious composition obtainable by the method described herein.

The terms "exhaust gas" and "flue gas" are used interchangeably.

The term "activatable solid feedstock" refers to any solid material which shows an increase in cementitious activity after being treated by at least step (v) of the method of the present invention. Preferably cementitious activity is determined by R³ reactivity testing in accordance with a modified version of the R³ test of ASTM C 1897-20 (referred to herein as "modified ASTM C 1897-20"), or strength activity testing in accordance with ASTM C311/311 M-22.

The modifications to the R³ test of ASTM C 1897-20 consist of:
- employing a ratio of calcium hydroxide to the supplementary cementitious material to be tested of 3:1;
- employing a liquid to solid ratio of 0.9, with 0.5 M KOH (pH 13.5);
- performing isothermal calorimetry at 50° C. for 10 days; and
- performing thermogravimetric analysis at 10 days.

Further, as will be evident to the skilled person, in performing tests according to ASTM C311/311M-22, the material to be tested should be used instead of the "fly ash or natural pozzolan" specified by the standard.

For the purposes of the present disclosure, ideal gas law is assumed such that the vol% of a gas is considered as equal to the mol%.

Reference to minerals or mineral groups made herein should be interpreted according to the Dana classification system as outlined in Dana's New Mineralogy, Eighth Edition, by Richard V. Gaines, H. Catherine Skinner, Eugene E. Foord, Brian Mason, and Abraham Rosenzweig, with sections by Vandall T. King, Illustrations by Eric Dowty, (ISBN: 047119310-0) Copyright 1997, John Wiley & Sons, Inc.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

The moisture content of the solid materials referred to herein refers to the moisture content determined by oven-drying the material at 150 °C until constant weight and comparing the initial weight with the dry weight.

In accordance with the invention, the particle size distribution characteristics referred to herein such as D10, D50 and D90 as well as the specific surface area (unless explicitly mentioned to be BET surface area) are determined by measuring with a laser light scattering particle size analyzer utilizing the Mie theory of light scattering, such as the Brookhaven laser particle sizer, Model Microbrook 2000LD or another instrument of equal or better sensitivity and reporting the data using a volume equivalent sphere model. As is known to the skilled person, the D50 is the volume median diameter, i.e. the diameter at which 50% of a sample's volume is comprised of smaller particles. Similarly, the D10 and D90 represent the diameter at which 10 or 90% of a sample's volume is comprised of smaller particles.

Whenever "at least part" is mentioned, this should be construed to also disclose the option "all", in other words "at least part" should be construed as "at least part or all" unless the context dictates otherwise.

In a first aspect of the invention there is provided preferably for the manufacture, preferably for the continuous manufacture, of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material;
(vii) producing low-carbon-footprint cement by mixing the first and/or second CO₂-activated material with the cement of step (iii), wherein mixing is performed
   (c) by feeding the first and/or second CO₂-activated material to the second size-reduction apparatus of step (iii) while step (iii) is being performed; and/or
   (d) by mixing the first and/or second CO₂-activated material with the cement obtained in step (iii) in a mixing apparatus different from the first, second and third size-reduction apparatus.

In preferred embodiments of the invention, the D90 of the first and/or second CO₂-activated material before the mixing of step (vii) is within the range of 0.5 to 120 µm, preferably within the range of 5 to 100 µm, more preferably within the range of 10-85 µm. Preferably the first CO₂-activated material has a D90 when it is recovered from the third size-reduction apparatus of within the range of 0.5 to 120 µm, preferably within the range of 5 to 100 µm, more preferably within the range of 10-85 µm. By preparing the CO₂-activated material to such a fine size in the third size-reduction apparatus (typically a mill), the size-reduction conditions can be optimized to the activatable feedstock and the second size-reduction apparatus capacity can be optimized as it only has to perform mixing of the activated material, not grinding.

The invention is especially relevant for retrofitting existing cement plants and is not particularly limited with regard to the extraction point of the exhaust gas from the cement plant. In embodiments of the method of the invention, step (iv) comprises withdrawing exhaust gas at one or more locations corresponding to a preheater stage, a calcining stage, a baghouse or a flue gas stack and conditioning said exhaust gas to obtain the conditioned exhaust gas. Typically, even when the present method is being applied, at least part of the exhaust gas is still released to the atmosphere via a flue gas stack. In some embodiments, the conditioning of step (iv) comprises treatment of the exhaust gas in an oxycombustion unit. In some embodiments the conditioning of step (iv) comprises concentration of the CO₂ comprised in the exhaust gas to a concentration of more than 60 vol%, such as more than 80 vol% or more than 90 vol%. In some embodiments the conditioning of step (iv) comprises concentration of the CO₂ comprised in the exhaust gas to essentially pure CO₂, for example having a CO₂ concentration of more than 95 vol% or more than 98 vol%, which concentration step may comprise a liquefication stage followed by evaporation of the liquefied CO₂, or a membrane separation stage to allow obtaining such high purity gas. In the context of the present invention such concentrated CO₂ streams are all still referred to as conditioned exhaust gas as they comprise CO₂ from the cement production process. As will be evident to the skilled person, since the present methods do not require high purity CO₂, it is preferred that the CO₂ concentration of the conditioned exhaust gas is within the range of 0.5-50 vol%, preferably 2-40 vol%, more preferably 5-35 vol%. Other more detailed preferred CO₂ concentrations for the conditioned exhaust gas are described herein elsewhere. Preferably the present methods do not comprise any liquefication of CO₂. In some embodiments of the invention the conditioning of step (iv) comprises treatment of the exhaust gas in a CO₂-recovery unit (e.g. a membrane separation unit), thereby producing a first stream having increased CO₂ concentration compared to the exhaust gas and a second stream having reduced CO₂ concentration compared to the exhaust gas, and providing the second stream as the conditioned exhaust gas, optionally after subjecting it to one or more further conditioning steps wherein temperature, pressure CO₂ concentration and/or humidity are modified.

Typically, the exhaust gas will be too hot to achieve efficient activation of an activatable material, in particular when a carbonatable substance is treated and thus carbonation is envisaged. In embodiments of the method of the invention, the exhaust gas withdrawn in step (iv) has a temperature of more than 200 °C, preferably more than 300 °C, preferably more than 400 °C.

In highly preferred embodiments of the invention, the method of the invention is provided wherein the conditioning of step (iv) comprises cooling the exhaust gas by at least 50 °C, preferably by at least 100 °C to provide the conditioned exhaust gas used in step (v). The conditioned exhaust gas preferably has a temperature within the range of 30-180°C, preferably within the range of 35-120 °C, most preferably within the range of 40-85 °C. The conditioned exhaust gas preferably has a relative humidity of at least 40%, preferably at least 60%, more preferably at least 70%.

The conditioning of step (iv) of the method of the present invention may (and often will) comprise multiple steps which modify the temperature, pressure, CO₂ concentration and/or humidity of the exhaust gas generated in step (ii) in order to provide the conditioned exhaust gas. For example, the exhaust gas generated in step (ii) may first be treated in an oxycombustion unit, and subsequently submitted to cooling and humidification steps in order to produce the conditioned exhaust gas.

In most situations, the feedstock used will comprise some carbonatable phases and it will be advantageous to perform step (vi) to achieve increased carbonation levels. Step (vi) may be performed using another CO₂ source, but is preferably performed using the same exhaust gas used in step (v). Hence, in preferred embodiments of the invention, step (vi) is performed and the CO₂-rich gas of step (vi) comprises at least part of the exhaust gas withdrawn in step (iv), wherein said exhaust gas may be used in step (vi) before or after said exhaust gas is used in step (v).

As is shown in some particular embodiments described in the Figures, if the exhaust gas is used in step (vi) before it is used in step (v), at least part of the conditioning of the exhaust gas may be effected by step (vi). Thus, in some embodiments of the invention, the exhaust gas is used in step (vi) before it is used in step (v) such that the conditioning of step (iv) comprises using at least part of the exhaust gas in step (vi), thereby effecting a change of temperature, pressure, CO₂ concentration and/or humidity of the exhaust gas.

In case the further CO₂-treatment of step (vi) is performed, the present inventors have found that it is advantageous to wet the material. In particular in case carbonatable phases are present in the feedstock, wetting may lead to increased carbonation. Thus, in embodiments of the invention the moisture content of the first CO₂-activated material is increased before and/or during step (vi), preferably by spraying an aqueous composition such as water on the solid material. The first CO₂-activated material having increased moisture content (also referred to as wetted material) preferably has a moisture content of less than 30 wt.% (by total weight of the wetted material), preferably less than 20 wt.%. With a view to carbonation efficiency, the wetted material preferably has a moisture content of at least 2 wt.% (by total weight of the wetted material), preferably at least 5 wt.%, more preferably at least 10 wt.%. At moisture contents of less than 30 wt.% (by total weight of the wetted material), the material still is and behaves like a solid. When the optional step of increasing the moisture content of the first CO₂-activated material before and/or during step (vi) is performed, the moisture content is preferably increased by at least 3 wt.% (by total weight of the first CO₂-activated material), more preferably at least 6 wt.%.

In embodiments of the invention wherein the moisture content of the first CO₂-activated material is increased before and/or during step (vi), it is further preferred that the method comprises a deagglomeration step which is applied during and/or after the moisture content of the first CO₂-activated material is increased, the deagglomeration step being applied before and/or during step (vi). In some embodiments of the invention the moisture content of the first CO₂-activated material is increased before step (vi), and the method comprises a deagglomeration step which is applied during and/or after the moisture content of the first CO₂-activated material is increased, the deagglomeration step being applied before step (vi).

In embodiments of the invention, the conditioning of step (iv) comprises using at least part of the exhaust gas for drying the second CO₂-activated material before the second CO₂-activated material is mixed in step (vii). Using the exhaust gas for drying should be construed as contacting the exhaust gas with the material to be-dried, but is not particularly limited to the exact setup used for drying (e.g. concurrent flow, counter-current flow, packed bed, moving bed, fluidized bed, etc.). It is particularly preferred that in those embodiments of the invention wherein the moisture content of the first CO₂-activated material is increased before and/or during step (vi), the conditioning of step (iv) comprises using at least part of the exhaust gas for drying the second CO₂-activated material before the second CO₂-activated material is mixed in step (vii). In these embodiments it will be understood that using at least part of the exhaust gas for drying will achieve conditioning of the gas as required by step (iv) since the drying will effect a change of temperature, pressure, CO₂ concentration and/or humidity of the exhaust gas. Drying preferably comprises drying the second CO₂-activated material to a moisture content of less than 8 wt.% (by total weight of the second CO₂-activated material), preferably less than 5 wt.%, more preferably less than 2 wt.%.

Depending on the moisture content of the starting material, the activatable solid feedstock may need to be dried to prevent caking during step (v). In embodiments of the invention, the conditioning of step (iv) comprises using at least part of the exhaust gas for drying the activatable solid feedstock before the activatable solid feedstock is size-reduced in step (v). Using the exhaust gas for drying should be construed as contacting the exhaust gas with the material to be-dried, but is not particularly limited to the exact setup used for drying (e.g. concurrent flow, counter-current flow, packed bed, moving bed, fluidized bed, etc.). In these embodiments it will be understood that using at least part of the exhaust gas for drying will achieve conditioning of the gas as required by step (iv) since the drying will effect a change of temperature, pressure, CO₂ concentration and/or humidity of the exhaust gas. Drying preferably comprises drying the activatable solid feedstock to a moisture content of less than 8 wt.% (by total weight of the activatable solid feedstock), preferably less than 5 wt.%, more preferably less than 2 wt.%. In some embodiments of the invention (for example in those embodiments of the invention wherein the moisture content of the first CO₂-activated material is increased before and/or during step (vi)) the conditioning of step (iv) comprises using at least part of the exhaust gas for drying the activatable solid feedstock before the activatable solid feedstock is size-reduced in step (v) and the conditioning of step (iv) comprises using at least part of the exhaust gas for drying the second CO₂-activated material before the second CO₂-activated material is mixed in step (vii).

In some embodiments where step (vi) is performed, recovering the second CO₂-activated material comprises a deagglomeration step.

### Characteristics of the cement production outlined in steps (i)-(iii)

The cement production outlined in steps (i)-(iii) of the method of the present invention may concern the production of any type of cement or geopolymer binder which encompasses a calcination stage. For example, regular Portland cement, LC3 cement, etc. In some embodiments of the invention, the cement obtained in step (iii) and/or the low-carbon-footprint cement produced in step (vii) is selected from CEM I cement, CEM II cement, CEM III cement, CEM IV cement or CEM V cement as defined in EN197-1 (2011).

The first size-reduction apparatus in typical cement production is referred to as a raw mill. The second size-reduction apparatus in typical cement production is referred to as a cement mill or finishing mill.

In preferred embodiments of the invention, the cement raw material used in step (i) comprises at least 70 wt.% limestone by total weight of the cement raw material. The cement raw material preferably further comprises a source of lime, a source of silicate and/or a source of iron oxide, preferably the cement raw material further comprises one or more of clay, shale, sand, iron ore, bauxite, fly ash, slag, cement kiln dust, lime kiln dust, concrete (e.g. recycled concrete fines).

In preferred embodiments of the invention, in step (iii) the cement clinker is submitted to size-reduction together with limestone and/or a source of calcium sulfate, preferably gypsum or anhydrite. In preferred embodiments of the invention, in step (iii) the cement clinker is submitted to size-reduction together with one or more supplementary cementitious materials other than the first and/or second CO₂-activated material.

In preferred embodiments of the invention, the cement raw meal is heated to a temperature of at least 700°C during step (ii), preferably at least 900 °C, more preferably at least 1100 °C. In preferred embodiments of the invention, the temperature during the one or more calcining stages is higher than the temperature during the one or more pre-heating stages, and preferably the temperature during the one or more pre-heating stages is at least 700 °C, and preferably the temperature during the one or more calcining stages is at least 1000 °C.

In preferred embodiments of the invention the second size-reduction apparatus of step (iii) is not operated under an exhaust gas atmosphere, but for example under a regular air atmosphere.

The method of the invention is suitable for the continuous manufacture of the low-carbon-footprint cement product obtained in step (vii). Preferably the production of the low-carbon-footprint cement product obtained in step (vii) is performed continuously by continuous and simultaneous operation of at least the size-reduction operation of step (v) and the mixing of step (vii), preferably by continuous and simultaneous operation of steps (i)-(vii). In this preferred embodiment the first, second and third size-reduction apparatus are simultaneously operating. The continuous process thus continuously outputs low-carbon-cement product over a given period of time. This is in contrast to batch processing wherein there is no continuous output of low-carbon-footprint cement product but rather a discrete portion ("batch") of feedstock which is treated for a time until the complete batch is fully processed all at once. In the scenarios where at least steps (v) and (vii), preferably all of steps (i)-(vii) are performed in continuous mode, some other unspecified may still be performed in batch mode. For example, the cement product of step (iii) may be produced in batch, stored in a silo and fed to the mixing of step (vii) to achieve continuous production of low-carbon-cement. In this case, steps (v) and (vii) are still considered to be continuous since the output of low-carbon-footprint cement product is continuous over a given period of time. However it is preferred if all of steps (i)-(vii) are performed in a continuous manner. In some embodiments of the invention, the method is operated such that the low-carbon-footprint cement is continuously produced over a period of at least 1 minute, preferably at least 10 minutes, more preferably at least 30 minutes. In preferred embodiments of the invention, the method is operated such that the low-carbon-footprint cement is continuously produced over a period of at least 1 hour, preferably at least 4 30 hours, more preferably at least 8 hours. In more preferred embodiments of the invention, the method is operated such that the cement of step (iii) and the low-carbon-footprint cement of step (vii) are continuously produced over a period of at least 1 minute, preferably at least 10 minutes, more preferably at least 30 minutes. In more preferred embodiments of the invention, the method is operated such that t the cement of step (iii) and the low-carbon-footprint cement of step (vii) are continuously produced over a period of at least 1 hour, preferably at 35 least 4 hours, more preferably at least 8 hours.

### The activatable solid feedstock

The activatable feedstock is preferably a material for which the cementitious activity can be increased by CO₂-mediated mechanochemical activation. A suitable way to identify such materials is by performing the following "activation test" comprising the steps of:
1- performing R³ reactivity testing in accordance with modified ASTM C 1897-20 or strength activity testing in accordance with ASTM C311/311 M-22 on a feedstock sample;
2- placing a mass of solid feedstock into a pressure cell stainless steel balls (diameter 12 mm, weight ratio feedstock:balls of 1 :50), followed by pressurization of the cell to 1 MPa, and rotation of the pressurized cell at 100 RPM for 48 hours, wherein the test is performed at an ambient temperature of 20°C and no heating or cooling is applied,
3- performing R³ reactivity testing in accordance with modified ASTM C 1897-20 or strength activity testing in accordance with ASTM C311/311 M-22 on the activatable feedstock,
4- selecting a material wherein the increase in R³ reactivity and/or strength activity index caused by step 2 of the activation test is at least 20%, preferably at least 40%.

In preferred embodiments of the invention, the activatable feedstock comprises a carbonatable material. Preferably the feedstock comprises at least 0.1 wt.% (by total weight of the feedstock) carbonatable material, preferably at least 0.5 wt.% (by total weight of the feedstock) carbonatable material, most preferably at least 2 wt.% (by total weight of the feedstock) carbonatable material. The carbonatable material is preferably selected from calcium oxides, calcium hydroxides, magnesium oxides, magnesium hydroxides, calcium silicates, magnesium silicates, and combinations thereof, more preferably from calcium oxides, calcium hydroxides, magnesium oxides, magnesium hydroxides and combinations thereof. In embodiments of the invention wherein the activatable feedstock comprises a carbonatable material, the material recovered in steps (v) and (vi) may also be referred to as first and second carbonated material respectively.

In preferred embodiments of the invention the activatable solid feedstock is selected from:
- Fly ashes, preferably from coal combustion, biomass combustion, and/or waste incineration;
- Bottom ashes, preferably from coal combustion, biomass combustion, and/or waste incineration;
- graphite,
- silicate minerals, preferably clays, olivine, wollastonite,
- mining tailings,
- glass, preferably soda-lime glass or borosilicate glass,
- slags,
- natural pozzolans,
- waste construction material, preferably recycled concrete, such as recycled concrete fines,
- cement bypass dust,
- lime kiln dust, and
- combinations thereof.

The term "clays" as used herein should be construed to refer to any solid material comprising at least 50 wt.% of hydrous aluminium phyllosilicates, preferably at least 75 wt.% of hydrous aluminium phyllosilicates, more preferably at least 90 wt.% of hydrous aluminium phyllosilicates. The phyllosilicate mineral typically occurs intermixed with other minerals and/or amorphous inorganic phases to form the feedstock. Typically, when the clay is selected as the activatable solid feedstock, the feedstock consists mainly or completely of rock (such as igneous rock, sedimentary rock or metamorphic rock) which was been ground to a particle size suitable for introduction into the process of the invention. The hydrous aluminium phyllosilicates are preferably selected from the kaolinite group, serpentinite group, mica group, chlorite group, and combinations thereof. The clay may be calcined or non-calcined but is preferably non-calcined.

The natural pozzolan is preferably selected from volcanic ash, volcanic rock, perlite, pumice, obsidian, scoria, tuffs (e.g. rhyolite tuffs, dacite tuffs, basaltic tuffs, trachytic tuffs, phonolitic tuffs, digenetic lithoid tuffs), andesite, clinoptiololite, heulandite, augite, apatite, titanite, biotite, hauynite, nosean, sodalite, magnetite, muscovite, chabazite, analcite, hematite, cristobalite, lecuite, kaolinite, illite, mica, hornblende, mordenite, andesites, basalt, diatomite, tripoli, cherts, opaline shales and zeolites, preferably selected from basalt, volcanic rock, perlite and zeolites.

The slag is preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag. The slag is preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag from ferrous metal production, nonferrous metal production, or phosphorus production. The slag is more preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag from iron or steel production, most preferably a BOF slag or an EAF slag.

The activatable solid feedstock is typically a particulate or granulate material, such as a powder, preferably having a D95 which is less than 20 mm, preferably less than 15 mm, more preferably less than 10 mm, most preferably less than 4 mm. For example, (as is typical in case the feedstock is a mineral material) the D95 may be in the range of 3-7 mm. In some embodiments of the invention, the D95 before the size-reduction is in the range of 1-20 mm, preferably in the range of 2-15 mm, more preferably in the range of 3-10 mm such as 3-7 mm. For example, (as is typical in case the feedstock is a fine material like a fly ash), the D95 may be less than 1 mm. The D95 described in this paragraph concerns the mass-based D95 determined by sieve analysis. The size of the activatable solid feedstock is not particularly limited and depends mostly on the capabilities of third-size reduction apparatus. Depending on the feedstock and sourcing of the feedstock, a raw material may need to be crushed or milled (optionally under an atmosphere comprising at least 0.5 vol% CO₂) in order to provide the activatable solid feedstock at a size suitable for introduction in the third size-reduction apparatus of step (v) of the present invention.

For the avoidance of doubt, the activatable solid feedstock may have been preconditioned by contact with a CO₂-rich gas such as an exhaust gas. Various such methods have been described herein, for example when the preconditioning of step (iv) comprises using at least part of the exhaust gas to dry the activatable solid feedstock.

### The size-reduction apparatuses used in the method

The methods of the present invention employ at least three distinct size-reduction apparatuses:
- a first size-reduction apparatus which is used in step (i) for the production of cement raw meal,
- a second size-reduction apparatus which is used in step (iii) for the production of cement (or low-carbon-footprint cement in case step (vii)(c) is performed), and
- a third size-reduction apparatus which is used in step (v) for the production of the first CO₂-activated material.

By operating in this way, highly active supplementary cementitious materials can be produced with minimal impact on regular cement plant operations.

Each of the size-reduction apparatuses employed are not particularly limited in their type but are typically a crusher or a mill. For example they may independently be selected from a ball mill, roller mill, basket mill, hammer mill, rotor-stator mill, pin mill, jet mill and/or rod mill. In some embodiments of the invention, the third size-reduction apparatus is a ball mill, while the first and second size-reduction apparatus are not a ball mill, for example the first and second size-reduction apparatus are a roller mill.

### The size-reduction of step (v)

The size-reduction of step (v) takes place in the presence of the conditioned exhaust gas, i.e. while contacting the conditioned exhaust gas. The third size-reduction apparatus may operate below, above or at atmospheric pressure. In some embodiments of the invention the third size-reduction apparatus operates under conditions where the conditioned exhaust gas is present inside the third size-reduction apparatus at a pressure higher than atmospheric pressure, in contact with the solid activatable material. In some embodiments of the invention the third size-reduction apparatus operates under conditions where the conditioned exhaust gas is present inside the third size-reduction apparatus at a pressure lower than atmospheric pressure, in contact with the solid activatable material. The latter situation is typical in case a flow of exhaust gas through the third size-reduction apparatus is created using e.g. an induction fan.

The conditioned exhaust gas provided to the third size-reduction apparatus in step (v) preferably has a CO₂ concentration of at least 1 vol%, preferably at least 2 vol%, more preferably at least 3 vol%. Preferably the CO₂ concentration is in the range of 0.5-40 vol%, more preferably in the range of 1-20 vol%, such as 2-15 vol%.

The temperature of the conditioned exhaust gas introduced into the third size-reduction apparatus in step (v) is preferably within the range of 30-180°C, preferably within the range of 35-120 °C, most preferably within the range of 40-85 °C.

The size-reduction of step (v) is preferably performed such that the ratio of the D90 of the first CO₂-activated material to the D90 of the activatable solid feedstock is less than 0.9:1, preferably less than 0.85:1, preferably less than 0.8:1. More preferably the size-reduction of step (v) is performed such that the ratio of the D90 of the first CO₂-activated material to the D90 of the activatable solid feedstock is less than 0.7:1, preferably less than 0.5:1, preferably less than 0.1:1, more preferably less than 0.05:1.

The D90 of the first CO₂-activated material is preferably within the range of 0.5 to 120 µm, preferably within the range of 5 to 100 µm, more preferably within the range of 10-85 µm.

Hence, it is preferred that the size-reduction of step (v) is performed such that ratio of the D90 of the first CO₂-activated material to the D90 of the activatable solid feedstock is less than 0.9:1, preferably less than 0.85:1, preferably less than 0.8:1; and the D90 of the first CO₂-activated material is 0.5 to 120 pm, preferably within the range of 5 to 100 µm, more preferably within the range of 10-85 µm. It is more preferred that the size-reduction of step (v) is performed such that ratio of the D90 of the first CO₂-activated material to the D90 of the activatable solid feedstock is less than 0.7:1, preferably less than 0.5:1, preferably less than 0.1:1, more preferably less than 0.05:1; and the D90 of the first CO₂-activated material is within the range of 0.5 to 120 µm, preferably within the range of 5 to 100 µm, more preferably within the range of 10-85 µm.

In preferred embodiments of the invention, the method described herein is provided wherein the first CO₂-activated material has one, two, three or four, preferably four of the following characteristics:
- a D10 within the range of 0.005 to 20 µm, preferably within the range of 0.005 to 10 µm, more preferably within the range of 0.005 to 5 µm;
- a D50 within the range of 0.1 to 100 µm, preferably within the range of 0.1 to 40 µm, more preferably within the range of 1-40 µm, most preferably within the range of 5-40 µm;
- a D90 within the range of 0.5 to 120 µm, preferably within the range of 5 to 100 µm, more preferably within the range of 10-85 µm;
- a BET surface area within the range of 0.1 to 10000 m²/g, preferably within the range of 0.5-2000 m²/g.

As will be clear from the present description, step (v) is typically a substantially dry process. While the present inventors have found that moisture control of the solid phase provides unique advantages, step (v) is preferably not performed on an aqueous solution or slurry. The present inventors have found that this greatly improves energy efficiency (as limited or no water has to be removed afterwards) and imparts unique properties on the resulting mechanochemically carbonated solid feedstocks, yielding materials which are substantially different from e.g. aqueous carbonation materials. Similarly, in case the optional step (vi) is applied, it is typically a substantially dry process. Preferably step (vi) is not performed on an aqueous solution or slurry.

### The optional step (vi) of the method

The optional step (vi) takes place outside of the size-reduction apparatus. This step is particularly useful when the activatable feedstock comprises carbonatable material, and can help to increase the overall carbonation levels achieved (and thus increase COz-removal from the exhaust gas). The treatment of step (vi) may be any treatment which contacts the first CO₂-activated material with a CO₂-rich gas comprising at least 0.5 vol% CO₂. Typically the CO₂-rich gas will be an exhaust gas obtained from the cement production process of steps (i)-(iii). Various such embodiments have been described herein.

Step (vi) may be a multi-stage process wherein multiple COz-contacting steps, for example using multiple reactors placed in sequence, are applied. In embodiments of the invention, step (vi) comprises
- placing the first CO₂-activated material in a holding means or container in contact with, preferably under a continuous flow of, the CO₂-rich gas, wherein the contacting preferably takes place for at least 15 minutes, at least 30 minutes, or at least 1 hour;
- storing the first CO₂-activated material in a preferably gas-tight container in contact with the CO₂-rich gas, wherein storage preferably takes place for at least 15 minutes, at least 30 minutes, or at least 1 hour;
- feeding the first CO₂-activated material to a fluidized bed wherein the fluidized bed is maintained using the CO₂-rich gas;
- contacting the first CO₂-activated material with the CO₂-rich gas in a reactor comprising a substantially airtight hollow housing and mechanical agitation means configured for contacting solid material during operation such that an agitated bed of solid material is created inside the reactor during operation; and/or
- generating a gas flow comprising the first CO₂-activated material entrained in the CO₂-rich gas.

Contacting the first CO₂-activated material with the CO₂-rich gas in step (vi) can be done with stirring or another form of agitation (preferably mild agitation), for example by employing a Continuously Stirred Tank Reactor (CSTR), a reactor as explained in more detail below, or as is the case for a fluidized bed.

A preferred way to perform step (vi) is by using a reactor comprising a substantially airtight hollow housing and mechanical agitation means configured for contacting solid material during operation such that an agitated bed of solid material is created inside the reactor during operation. The reactor comprises mechanical agitation means positioned within the housing. The mechanical agitation means is provided for creating an agitated bed of solid material inside the reactor during operation. Thus, step (vi) of the method preferably comprises operating the reactor to provide an agitated bed of solid material. The mechanical agitation means may be provided in the form of any means known to the skilled person capable of creating an agitated bed. Such a reactor is not a fluidized bed reactor, which employs a high velocity gas stream to fluidize a solid bed. Thus, at any point during step (vi) of the method, the gas velocity inside the reactor is lower than the minimum fluidization velocity for the solid feedstock, preferably lower than 80% of the minimum fluidization velocity for the solid feedstock. Examples of mechanical agitation means are lifting flights mounted in the interior of a rotary drum (e.g. attached to the housing of a rotary drum), milling media (such as inert balls or beads) inside a rotary drum, static paddles mounted inside a rotary drum, a rotary shaft-driven agitation apparatus positioned within the reactor housing (e.g. a screw or a mixer). In preferred embodiments of the invention, the mechanical agitation means is a rotary shaft-driven agitator such as a screw (preferably a shaftless screw, or a screw wherein the helical flighting is attached to the outer surface of a screw shaft), a plough mixer, a ribbon mixer or a paddle mixer (e.g. a pug-mill). The reactor is preferably configured to move the feedstock from a solid feedstock inlet to a solid material outlet of the reactor. The solid feedstock inlet and outlet are preferably located at opposite ends of the reactor. Since during operation an agitated bed of solid material exists in the reactor, the reactor is preferably configured to move the particles comprised in the agitated bed from the inlet of the reactor to an outlet of the reactor. The skilled person will understand that during normal operation, wherein the reactor is continuously fed with first CO₂-activated material, the agitated bed in the apparatus is constantly present, but the individual particles comprised in the bed will move from the inlet to the outlet of the apparatus in accordance with their average residence time in the apparatus. Thus, step (vi) preferably comprises operating the reactor such that individual particles of the solid feedstock move from the inlet to the outlet of the apparatus. In preferred embodiments, the rotary-shaft driven agitator comprises a rotary shaft placed approximately horizontally.

It is highly preferred that step (vi) does not result in significant size reduction. If no stirring or mild agitation is applied, then some agglomeration may take place. Hence, recovering the second CO₂-activated material optionally comprises a deagglomeration step. In preferred embodiments of the invention, the ratio of the D90 of the first CO₂-activated material recovered in step (v) to the D90 of the second CO2-activated material recovered in step (vi), is within the range of 0.65-1.35, preferably within the range of 0.8-1.2, more preferably within the range of 0.9-1.1, more preferably within the range of 0.95-1.05.

### Production of ternary, quaternary or higher low-carbon footprint cements.

The present invention can be applied for the production of low-carbon blended cements comprising multiple distinct CO₂-activated materials which are each prepared from different activatable feedstocks. Each activatable feedstock is processed using its own size-reduction apparatus such that equipment and processing parameters can be optimized for each activatable feedstock before they are mixed in step (vii). In as such, ternary, quarternary or higher low-carbon footprint cements can be produced.

In embodiments of the invention there is provided a method for the manufacture, preferably for the continuous manufacture, of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the conditioned exhaust gas, thereby obtaining a third CO₂-activated material, and recovering the third CO₂-activated material;
(vi)
   (a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
   (b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(vii) producing low-carbon-footprint cement by mixing
   - the first and/or second CO₂-activated material;
   - the third and/or fourth CO₂-activated material; and
   - the cement of step (iii);
   wherein mixing is performed
   (a) by feeding the CO₂-activated materials to the second size-reduction apparatus of step (iii) while step (iii) is being performed; and/or
   (b) by mixing the CO₂-activated materials with the cement obtained in step (iii) in a mixing apparatus different from the first, second, third and fourth size-reduction apparatus.

In embodiments of the invention there is provided a method for the manufacture, preferably for the continuous manufacture, of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv)
   (a) withdrawing at least part of the exhaust gas generated in step (ii) and conditioning it by modifying one or more of temperature, pressure, CO₂ concentration and humidity, thereby obtaining a first conditioned exhaust gas which has a temperature within the range of 30-300°C and comprises at least 0.5 vol% CO₂; and
   (b) withdrawing at least part of the exhaust gas generated in step (ii) and/or part of the first conditioned exhaust gas and conditioning it by modifying one or more of temperature, pressure, CO₂ concentration and humidity, thereby obtaining a second conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the first conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the second conditioned exhaust gas, thereby obtaining a third CO₂-activated material, and recovering the third CO₂-activated material;
(vi)
   (a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
   (b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(vii) producing low-carbon-footprint cement by mixing
   - the first and/or second CO₂-activated material;
   - the third and/or fourth CO₂-activated material; and
   - the cement of step (iii);
   wherein mixing is performed
   (a) by feeding the CO₂-activated materials to the second size-reduction apparatus of step (iii) while step (iii) is being performed; and/or
   (b) by mixing the CO₂-activated materials with the cement obtained in step (iii) in a mixing apparatus different from the first, second, third and fourth size-reduction apparatus.

In these methods, the first and second activatable feedstocks are preferably different materials. For example, the first activatable feedstock may be a slag, and the second activatable feedstock may be a clay. For example, the first activatable feedstock may be a slag, and the second activatable feedstock may be a cement bypass dust. For example, the first activatable feedstock may be a slag, and the second activatable feedstock may be a recycled building material (e.g. concrete fines). For example, the first activatable feedstock may be a slag, and the second activatable feedstock may be an ash. For example, the first activatable feedstock may be an ash, and the second activatable feedstock may be a clay. For example, the first activatable feedstock may be an ash, and the second activatable feedstock may be a cement bypass dust. For example, the first activatable feedstock may be an ash, and the second activatable feedstock may be a recycled building material (e.g. concrete fines).

The first and second conditioned exhaust gas preferably have a different temperature and/or relative humidity.

The first CO₂-activated material may have a D50 different from the second CO₂-activated material, for example at least 5 micron of difference, preferably at least 10 micron of difference exists between the D50 of the first CO₂-activated material and the D50 of the second CO₂-activated material. The third and fourth size-reduction apparatus may be operated at a different solid material throughput rate.

In embodiments of the invention there is provided preferably for the manufacture, preferably for the continuous manufacture, of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the conditioned exhaust gas, thereby obtaining a first CO₂-activated material, and recovering the first CO₂-activated material;
   (b) subjecting a second activatable solid feedstock to a size-reduction operation in a fourth size-reduction apparatus in the presence of the conditioned exhaust gas, thereby obtaining a third CO₂-activated material, and recovering the third CO₂-activated material; and
   (c) subjecting a third activatable solid feedstock to a size-reduction operation in a fifth size-reduction apparatus in the presence of the conditioned exhaust gas, thereby obtaining a fifth CO₂-activated material, and recovering the fifth CO₂-activated material;
(vi)
   (a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material;
   (b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
   (c) optionally submitting the fifth CO₂-activated material to one or more further treatments where it is contacted with a CO₂-rich gas comprising at least 0.5 vol% CO₂ outside the fifth size-reduction apparatus, thereby obtaining a sixth CO₂-activated material, and recovering the sixth CO₂-activated material; and
(vii) producing low-carbon-footprint cement by mixing
   - the first and/or second CO₂-activated material;
   - the third and/or fourth CO₂-activated material;
   - the fifth and/or sixth CO₂-activated material; and
   - the cement of step (iii);
   wherein mixing is performed
   (a) by feeding the CO₂-activated materials to the second size-reduction apparatus of step (iii) while step (iii) is being performed; and/or
   (b) by mixing the CO₂-activated materials with the cement obtained in step (iii) in a mixing apparatus different from the first, second, third, fourth, fifth or sixth size-reduction apparatus.

In embodiments of the invention there is provided preferably for the manufacture, preferably for the continuous manufacture, of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv)
   (a) withdrawing at least part of the exhaust gas generated in step (ii) and conditioning it by modifying one or more of temperature, pressure, CO₂ concentration and humidity, thereby obtaining a first conditioned exhaust gas which has a temperature within the range of 30-300°C and comprises at least 0.5 vol% CO₂; and
   (b) withdrawing at least part of the exhaust gas generated in step (ii) and/or part of the first conditioned exhaust gas and conditioning it by modifying one or more of temperature, pressure, CO₂ concentration and humidity, thereby obtaining a second conditioned exhaust gas which has a temperature within the range of 30-300°C and comprises at least 0.5 vol% CO₂;
   (c) withdrawing at least part of the exhaust gas generated in step (ii) and/or part of the first conditioned exhaust gas and/or part of the second conditioned exhaust gas and conditioning it by modifying one or more of temperature, pressure, CO₂ concentration and humidity, thereby obtaining a third conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the first conditioned exhaust gas, thereby obtaining a first CO₂-activated material, and recovering the first CO₂-activated material;
   (b) subjecting a second activatable solid feedstock to a size-reduction operation in a fourth size-reduction apparatus in the presence of the second conditioned exhaust gas, thereby obtaining a third CO₂-activated material, and recovering the third CO₂-activated material; and
   (c) subjecting a third activatable solid feedstock to a size-reduction operation in a fifth size-reduction apparatus in the presence of the third conditioned exhaust gas, thereby obtaining a fifth CO₂-activated material, and recovering the fifth CO₂-activated material;
(vi)
   (a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material;
   (b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
   (c) optionally submitting the fifth CO₂-activated material to one or more further treatments where it is contacted with a CO₂-rich gas comprising at least 0.5 vol% CO₂ outside the fifth size-reduction apparatus, thereby obtaining a sixth CO₂-activated material, and recovering the sixth CO₂-activated material; and
(vii) producing low-carbon-footprint cement by mixing
   - the first and/or second CO₂-activated material;
   - the third and/or fourth CO₂-activated material;
   - the fifth and/or sixth CO₂-activated material; and
   - the cement of step (iii);
   wherein mixing is performed
   (a) by feeding the CO₂-activated materials to the second size-reduction apparatus of step (iii) while step (iii) is being performed; and/or
   (b) by mixing the CO₂-activated materials with the cement obtained in step (iii) in a mixing apparatus different from the first, second, third, fourth, fifth or sixth size-reduction apparatus.

In these methods, the first, second and third activatable feedstocks are preferably different materials.

The first, second and third conditioned exhaust gas preferably have a different temperature and/or relative humidity.

The third, fourth and fifth size-reduction apparatus may be operated at a different solid material throughput rate.

As will be understood by the skilled person based on the present disclosure, further iterations are possible where a fourth activatable solid feedstock, fifth activatable solid feedstock, sixth activatable solid feedstock, etc. are processed using dedicated size-reduction apparatuses.

All preferred properties described herein in general for the activatable feedstock should also be considered explicitly disclosed as preferred properties of the first, second, third, and further activatable feedstock. All preferred properties described herein in general for the first CO₂-activated materials should also be considered explicitly disclosed as preferred properties of the third, fifth and further CO₂-activated materials. All preferred properties described herein in general for the second CO₂-activated materials should also be considered explicitly disclosed as preferred properties of the second, fourth and further CO₂-activated materials. All preferred properties described herein in general for the conditioned exhaust gas should also be considered explicitly disclosed as preferred properties of the first, second, third and further conditioned exhaust gas. All preferred properties described herein in general for step (iv) should also be considered explicitly disclosed as preferred properties of the steps (iv)(a), (iv)(b), (iv)(c) and further. All preferred properties described herein in general for step (v) should also be considered explicitly disclosed as preferred properties of the steps (v)(a), (v)(b), (v)(c) and further. All preferred properties described herein in general for step (iv) should also be considered explicitly disclosed as preferred properties of the steps (vi)(a), (vi)(b), (vi)(c) and further.

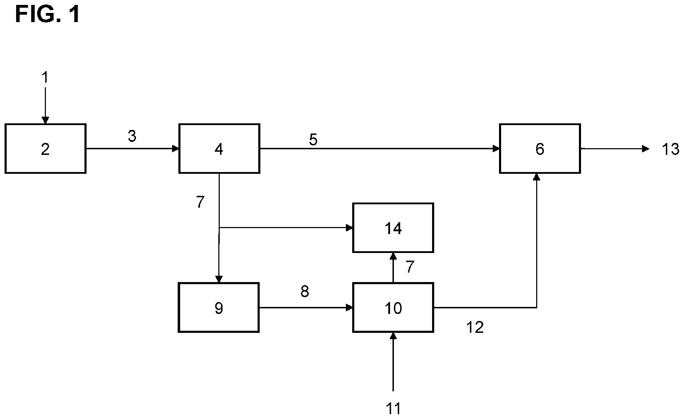

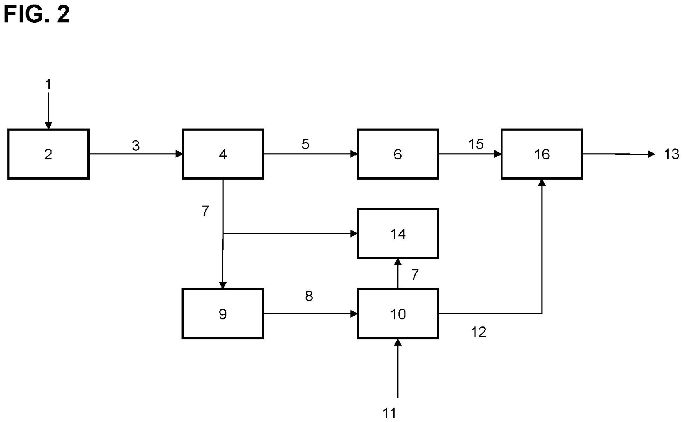

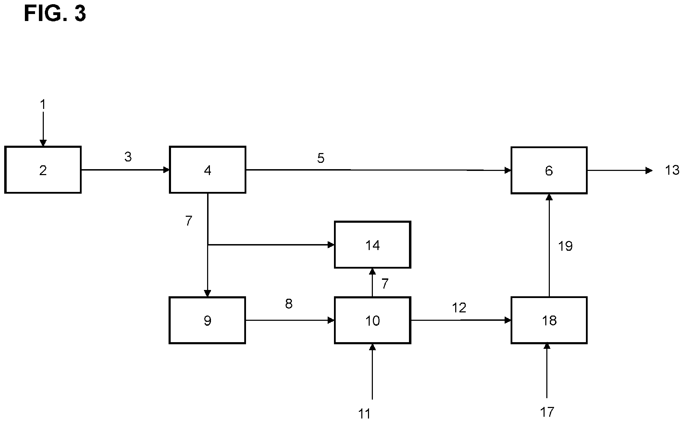

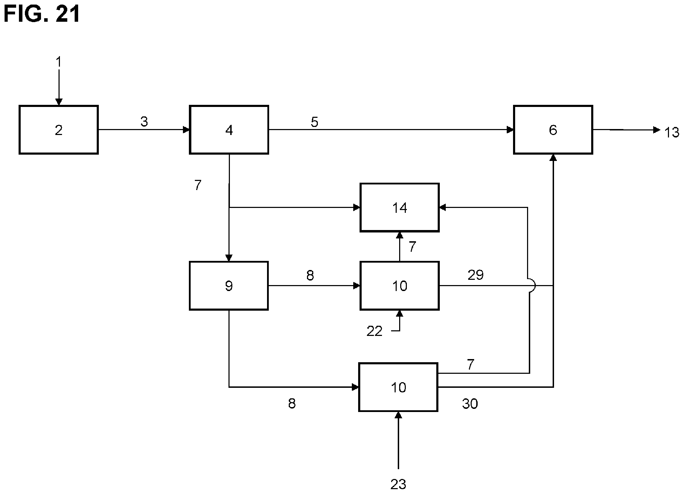

It will be understood by the skilled person that Figures 21-24 which show a few examples of embodiments of the invention wherein multiple activatable feedstocks are treated, are variations of the embodiments shown in Figures 1 and 2 wherein processing of an additional activatable feedstock has been included. It should be understood that variations of the embodiments embodiments described herein (such as those shown in Figures 3-20) can be created *mutatis mutandis* by including the processing of an additional activatable feedstock.

### Embodiments of the invention as shown in the figures.

Figures 1-24 describes various embodiments of the methods of the present invention. It is explicitly contemplated that the embodiments shown in the figures are further combined with the various embodiments of the invention described throughout this document. For example (but not limited to) embodiments describing preferred feedstocks, particle sizes, etc.

The following reference numerals are used:
1: Cement raw material
2: Size reduction in first size-reduction apparatus
3: Cement raw meal
4: Pre-heating and calcining
5: Cement clinker
6: Size reduction in second size-reduction apparatus
7: Exhaust gas
8: Conditioned exhaust gas
9: Conditioning
10: Size reduction and activation
11: Activatable feedstock
12: First CO₂-activated material
13: Low-carbon-footprint cement
14: Flue gas stack
15: Cement
16: Mixing
17: CO₂-rich gas
18: CO₂-contacting
19: Second CO₂-activated material
20: Drying
21: Dried activatable feedstock
22: First activatable feedstock
23: Second activatable feedstock
24: First conditioned exhaust gas
25: Second conditioned exhaust gas
26: Solid material
27: Wetting
28: Wetted material
29: First CO₂-activated material
30: Second CO₂-activated 29material

Figure 1 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material; and
(vii) producing low-carbon-footprint cement by mixing the first CO₂-activated material with the cement of step (iii), wherein mixing is performed by feeding the first CO₂-activated material to the second size-reduction apparatus of step (iii) while step (iii) is being performed.
In this embodiment, optional step (vi) is not performed.

Figure 2 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material; and
(vii) producing low-carbon-footprint cement by mixing the first CO₂-activated material with the cement of step (iii), wherein mixing is performed by mixing the first CO₂-activated material with the cement obtained in step (iii) in a mixing apparatus different from the first, second and third size-reduction apparatus.
In this embodiment, optional step (vi) is not performed.

Figure 3 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed.

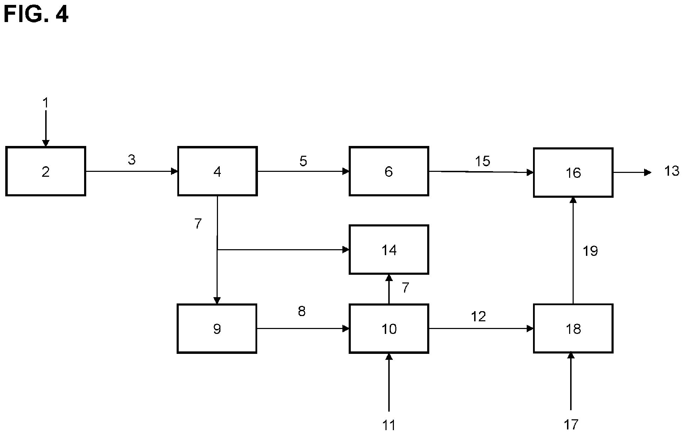

Figure 4 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus.

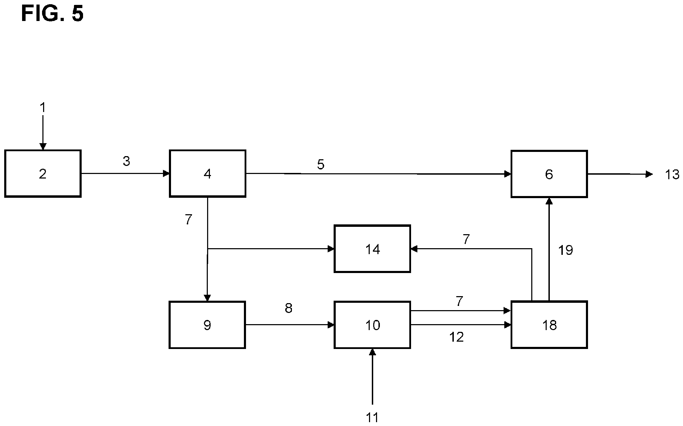

Figure 5 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,
wherein the CO₂-rich gas of step (vi) comprises at least part of the exhaust gas withdrawn in step (iv), and said exhaust gas is used in step (vi) after said exhaust gas is used in step (v).

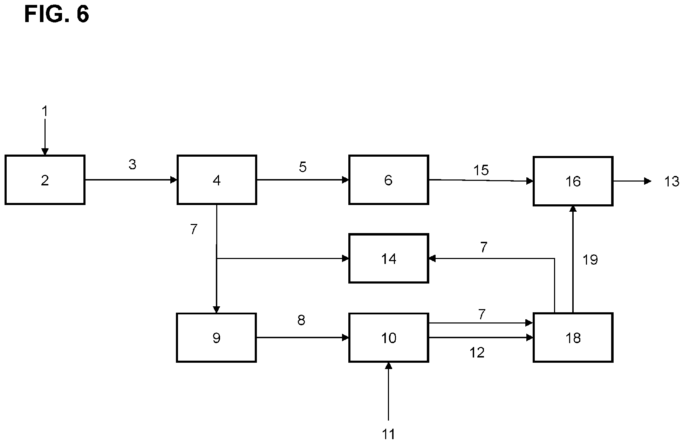

Figure 6 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,
wherein the CO₂-rich gas of step (vi) comprises at least part of the exhaust gas withdrawn in step (iv), and said exhaust gas is used in step (vi) after said exhaust gas is used in step (v).

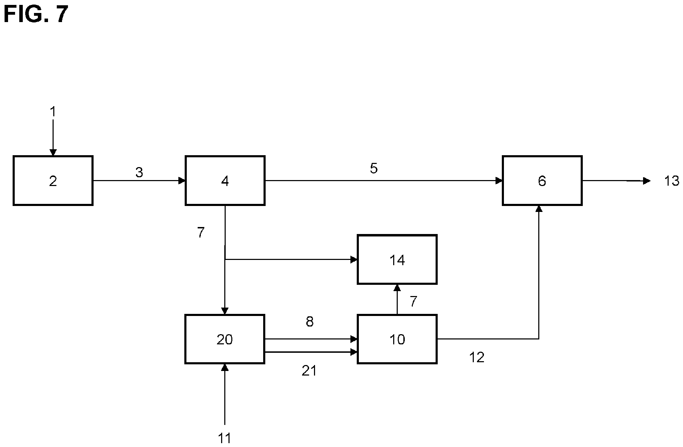

Figure 7 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material; and
(vii) producing low-carbon-footprint cement by mixing the first CO₂-activated material with the cement of step (iii), wherein mixing is performed by feeding the first CO₂-activated material to the second size-reduction apparatus of step (iii) while step (iii) is being performed,
wherein the conditioning of step (iv) comprises using at least part of the exhaust gas for drying the activatable solid feedstock before the activatable solid feedstock is size-reduced in step (v).
In this embodiment, optional step (vi) is not performed.

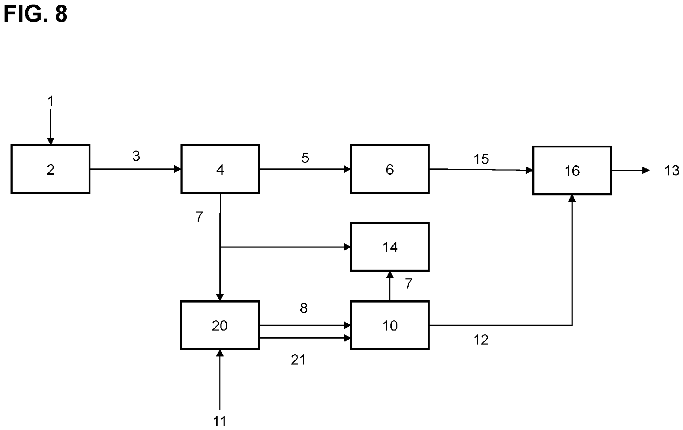

Figure 8 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material; and
(vii) producing low-carbon-footprint cement by mixing the first CO₂-activated material with the cement of step (iii), wherein mixing is performed by mixing the first CO₂-activated material with the cement obtained in step (iii) in a mixing apparatus different from the first, second and third size-reduction apparatus,
wherein the conditioning of step (iv) comprises using at least part of the exhaust gas for drying the activatable solid feedstock before the activatable solid feedstock is size-reduced in step (v).
In this embodiment, optional step (vi) is not performed.

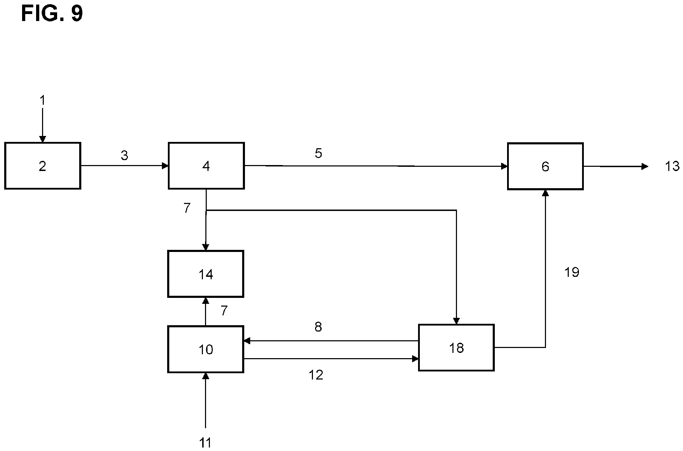

Figure 9 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,
wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas.

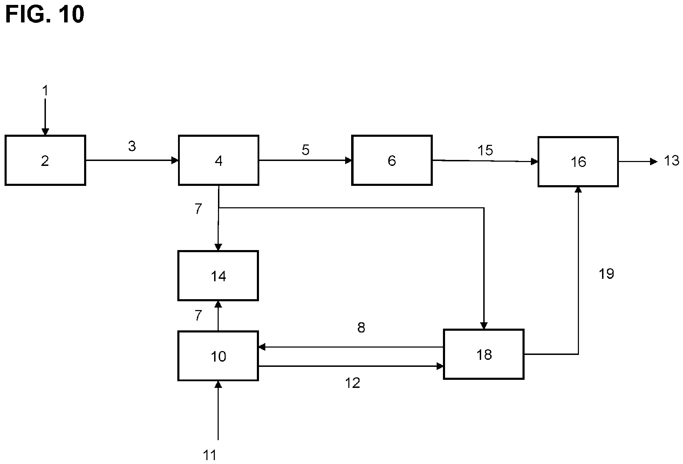

Figure 10 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,
wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas.

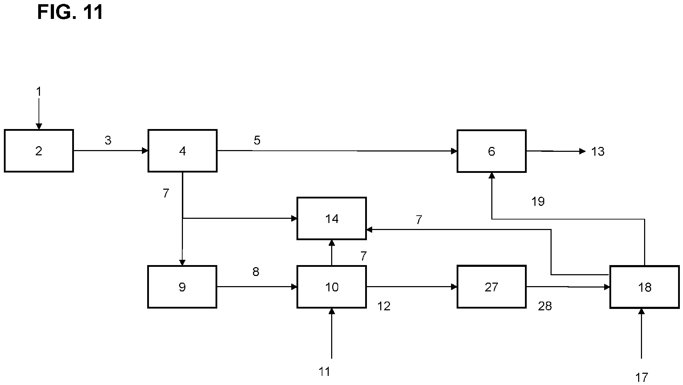

Figure 11 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

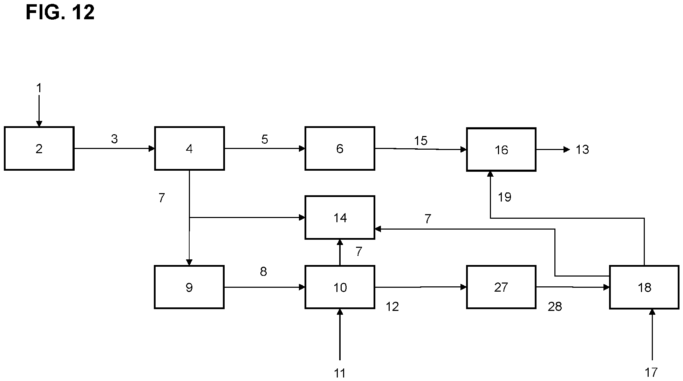

Figure 12 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

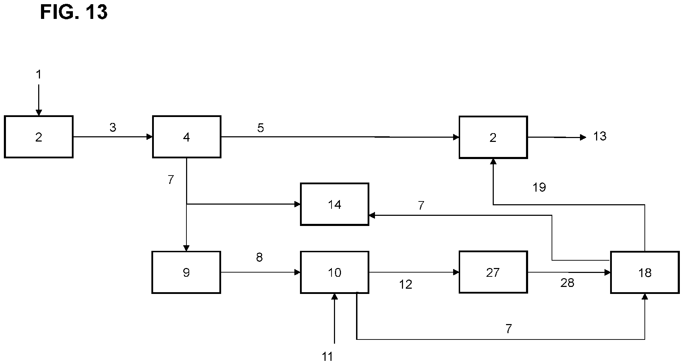

Figure 13 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,

wherein the CO₂-rich gas of step (vi) comprises at least part of the exhaust gas withdrawn in step (iv), and said exhaust gas is used in step (vi) after said exhaust gas is used in step (v),
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

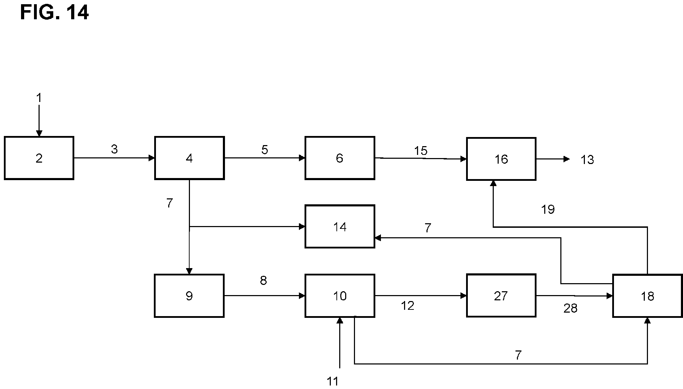

Figure 14 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,

wherein the CO₂-rich gas of step (vi) comprises at least part of the exhaust gas withdrawn in step (iv), and said exhaust gas is used in step (vi) after said exhaust gas is used in step (v),
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

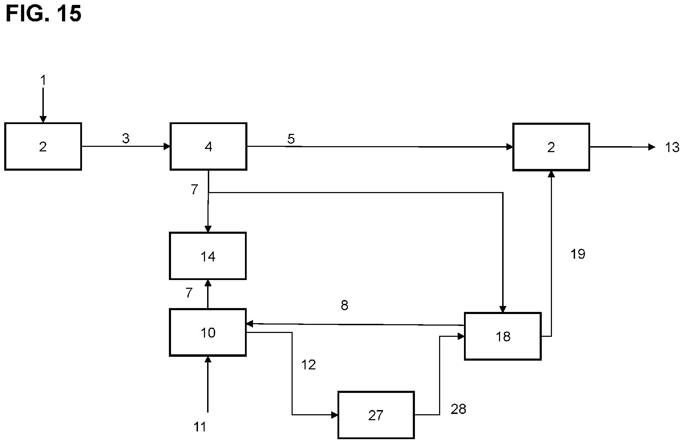

Figure 15 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,

wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas,
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

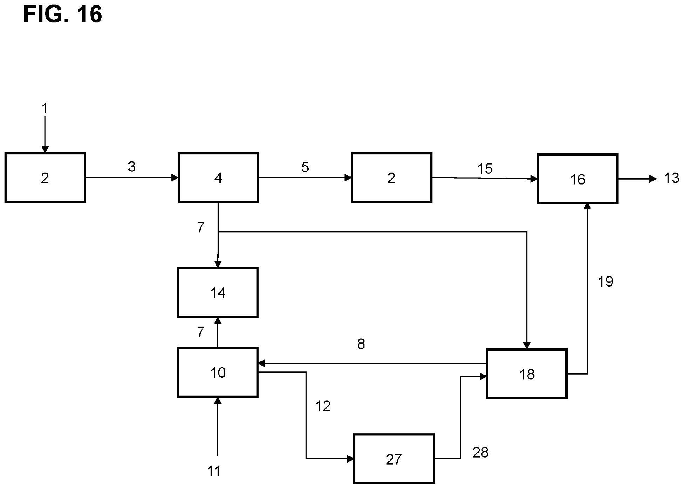

Figure 16 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,

wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas,
wherein the moisture content of the first CO₂-activated material is increased before and/or during step (vi), preferably by spraying an aqueous composition such as water on the solid material. The step of increasing the moisture content is shown as "wetting" in the Figure and even though shown as a separate box it may take place during step (vi).

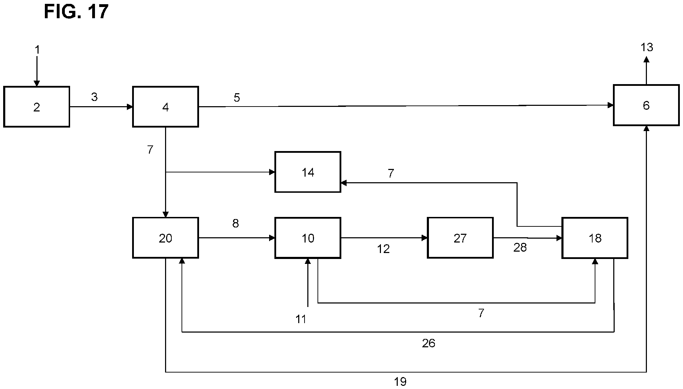

Figure 17 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,

wherein the moisture content of the first CO₂-activated material is increased before and/or during step (vi), preferably by spraying an aqueous composition such as water on the solid material,
wherein the conditioning of step (iv) comprises using at least part of the exhaust gas for drying the second CO₂-activated material before the second CO₂-activated material is mixed in step (vii),
wherein the CO₂-rich gas of step (vi) comprises at least part of the exhaust gas withdrawn in step (iv), and said exhaust gas is used in step (vi) after said exhaust gas is used in step (v).
The step of increasing the moisture content is shown as "wetting" in the Figure and even though shown as a separate box it may take place during step (vi).

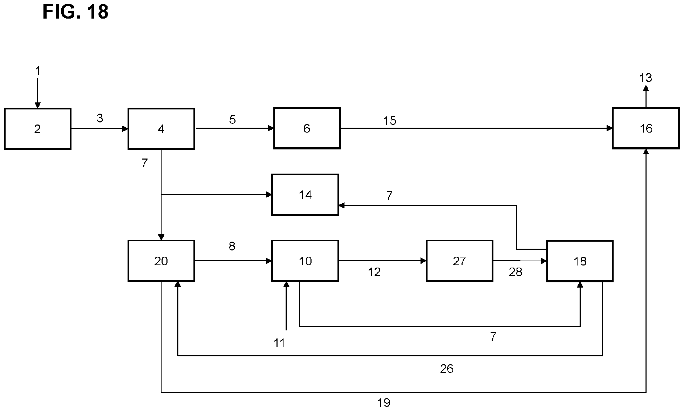

Figure 18 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,

wherein the moisture content of the first CO₂-activated material is increased before and/or during step (vi), preferably by spraying an aqueous composition such as water on the solid material,
wherein the conditioning of step (iv) comprises using at least part of the exhaust gas for drying the second CO₂-activated material before the second CO₂-activated material is mixed in step (vii),
wherein the CO₂-rich gas of step (vi) comprises at least part of the exhaust gas withdrawn in step (iv), and said exhaust gas is used in step (vi) after said exhaust gas is used in step (v).
The step of increasing the moisture content is shown as "wetting" in the Figure and even though shown as a separate box it may take place during step (vi).

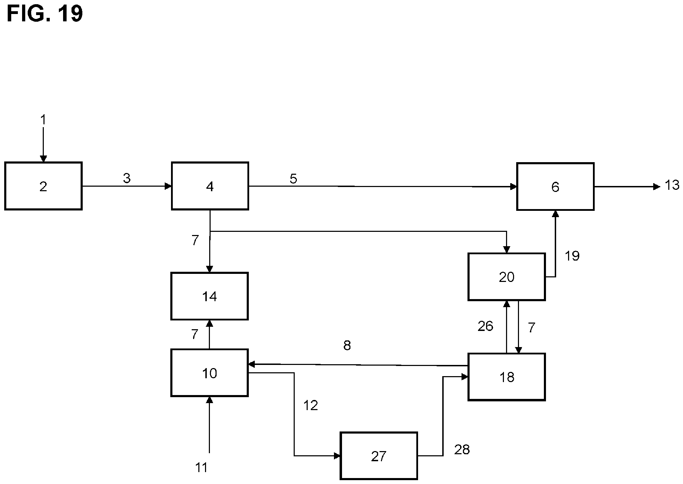

Figure 19 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by feeding the second CO₂-activated material to the second size-reduction apparatus of step (iii) while step (iii) is being performed,

wherein the moisture content of the first CO₂-activated material is increased before and/or during step (vi), preferably by spraying an aqueous composition such as water on the solid material,
wherein the conditioning of step (iv) comprises using at least part of the exhaust gas for drying the second CO₂-activated material before the second CO₂-activated material is mixed in step (vii),
wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas.
The step of increasing the moisture content is shown as "wetting" in the Figure and even though shown as a separate box it may take place during step (vi).

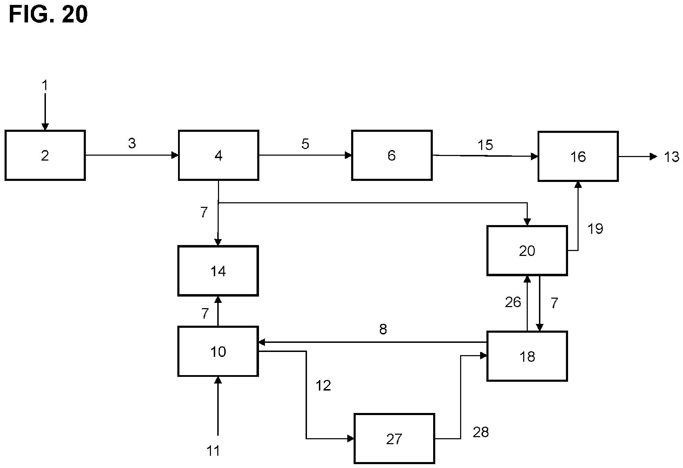

Figure 20 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the second CO₂-activated material with the cement of step (iii), wherein mixing is performed by mixing the second CO₂-activated material with the cement obtained in step (iii) in a mixing apparatus different from the first, second and third size-reduction apparatus,

wherein the moisture content of the first CO₂-activated material is increased before and/or during step (vi), preferably by spraying an aqueous composition such as water on the solid material,
wherein the conditioning of step (iv) comprises using at least part of the exhaust gas for drying the second CO₂-activated material before the second CO₂-activated material is mixed in step (vii),
wherein the CO₂-rich gas of step (vi) comprises at least part of the exhaust gas withdrawn in step (iv), and said exhaust gas is used in step (vi) before said exhaust gas is used in step (v), such that the conditioning of step (iv) comprises using at least part of the exhaust gas in step (vi), thereby effecting a change of temperature, pressure, CO₂ concentration and/or humidity of the exhaust gas.
The step of increasing the moisture content is shown as "wetting" in the Figure and even though shown as a separate box it may take place during step (vi).

Figure 21 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the conditioned exhaust gas, thereby obtaining a third CO₂-activated material, and recovering the third CO₂-activated material; and
(vii) producing low-carbon-footprint cement by mixing the first CO₂-activated material and the third CO₂-activated material with the cement of step (iii), wherein mixing is performed by feeding the first CO₂-activated material to the second size-reduction apparatus of step (iii) while step (iii) is being performed.
In this embodiment, optional step (vi) is not performed. In this embodiment, the first and second activatable feedstocks are different materials. In this embodiment, the third and fourth size-reduction apparatus are operated at a different solid material throughput rate. In this embodiment the D50 of the first CO₂-activated material differs from the D50 of the second CO₂-activated material.

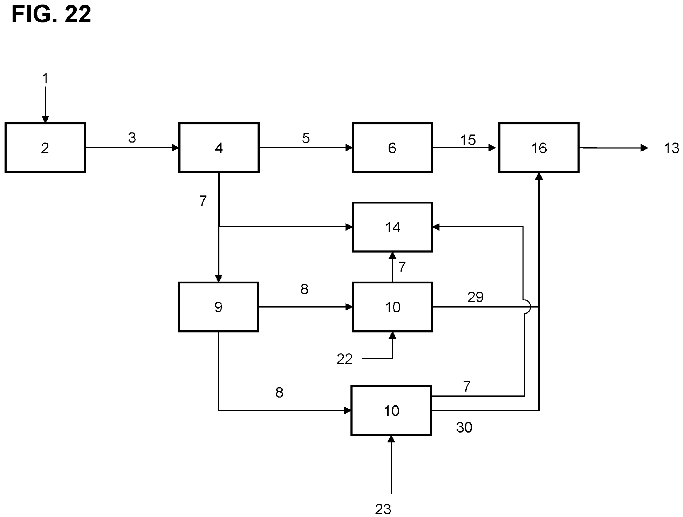

Figure 22 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the conditioned exhaust gas, thereby obtaining a third CO₂-activated material, and recovering the third CO₂-activated material; and
(vii) producing low-carbon-footprint cement by mixing the first CO₂-activated material and second CO₂-activated material with the cement of step (iii), wherein mixing is performed by mixing the first CO₂-activated material with the cement obtained in step (iii) in a mixing apparatus different from the first, second, third and fourth size-reduction apparatus.

In this embodiment, optional step (vi) is not performed. In this embodiment, the first and second activatable feedstocks are different materials. In this embodiment, the third and fourth size-reduction apparatus are operated at a different solid material throughput rate. In this embodiment the D50 of the first CO₂-activated material differs from the D50 of the second CO₂-activated material.

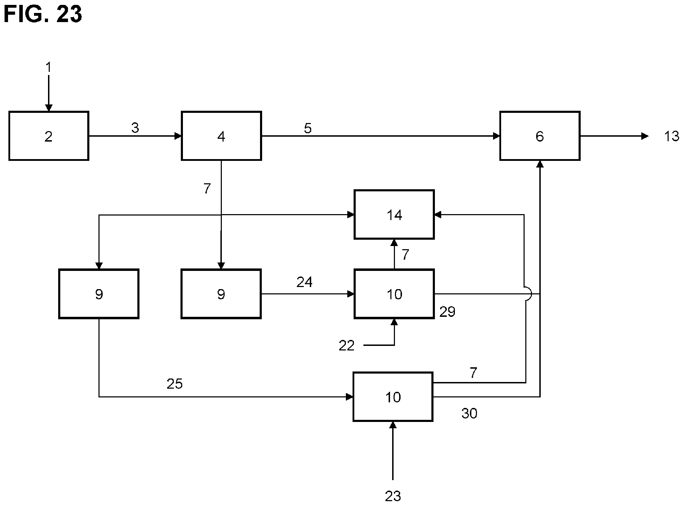

Figure 23 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv)
   (a) withdrawing at least part of the exhaust gas generated in step (ii) and conditioning it by modifying one or more of temperature, pressure, CO₂ concentration and humidity, thereby obtaining a first conditioned exhaust gas which has a temperature within the range of 30-300°C and comprises at least 0.5 vol% CO₂; and
   (b) withdrawing at least part of the exhaust gas generated in step (ii) and conditioning it by modifying one or more of temperature, pressure, CO₂ concentration and humidity, thereby obtaining a second conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the first conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the second conditioned exhaust gas, thereby obtaining a third CO₂-activated material, and recovering the third CO₂-activated material; and
(vii) producing low-carbon-footprint cement by mixing the first CO₂-activated material and the third CO₂-activated material with the cement of step (iii), wherein mixing is performed by feeding the first CO₂-activated material to the second size-reduction apparatus of step (iii) while step (iii) is being performed.
In this embodiment, optional step (vi) is not performed. In this embodiment, the first and second activatable feedstocks are different materials. In this embodiment, the third and fourth size-reduction apparatus are operated at a different solid material throughput rate. In this embodiment the D50 of the first CO₂-activated material differs from the D50 of the second CO₂-activated material. In this embodiment the first and second conditioned exhaust gas have a different temperature and relative humidity.

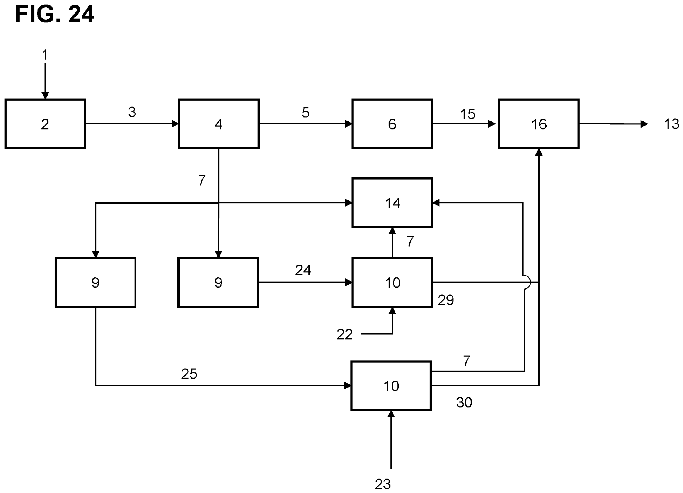

Figure 24 describes preferably for the manufacture, preferably for the continuous manufacture, of low-carbon-footprint cement according to the present invention comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂, wherein at least part of the exhaust gas is released to the atmosphere via a flue gas stack;
(iii) subjecting the cement clinker to a size-reduction operation in a second size-reduction apparatus, thereby obtaining cement;
(iv)
   (a) withdrawing at least part of the exhaust gas generated in step (ii) and conditioning it by modifying one or more of temperature, pressure, CO₂ concentration and humidity, thereby obtaining a first conditioned exhaust gas which has a temperature within the range of 30-300°C and comprises at least 0.5 vol% CO₂; and
   (b) withdrawing at least part of the exhaust gas generated in step (ii) and conditioning it by modifying one or more of temperature, pressure, CO₂ concentration and humidity, thereby obtaining a second conditioned exhaust gas which has a temperature within the range of 30-300°C and comprises at least 0.5 vol% CO₂;
(v)
   (a) subjecting a first activatable solid feedstock to a size-reduction operation in a third size-reduction apparatus in the presence of the first conditioned exhaust gas, thereby obtaining a first CO₂-activated material, and recovering the first CO₂-activated material; and
   (b) subjecting a second activatable solid feedstock to a size-reduction operation in a fourth size-reduction apparatus in the presence of the second conditioned exhaust gas, thereby obtaining a third CO₂-activated material, and recovering the third CO₂-activated material; and
(vii) producing low-carbon-footprint cement by mixing the first CO₂-activated material and second CO₂-activated material with the cement of step (iii), wherein mixing is performed by mixing the first CO₂-activated material with the cement obtained in step (iii) in a mixing apparatus different from the first, second, third and fourth size-reduction apparatus.
In this embodiment, optional step (vi) is not performed. In this embodiment, the first and second activatable feedstocks are different materials. In this embodiment, the third and fourth size-reduction apparatus are operated at a different solid material throughput rate. In this embodiment the D50 of the first CO₂-activated material differs from the D50 of the second CO₂-activated material. In this embodiment the first and second conditioned exhaust gas have a different temperature and relative humidity.

## Claims

1. A method for the manufacture of low-carbon-footprint cement comprising the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v) subjecting an activatable solid feedstock to a size-reduction operation in a third size-reduction apparatus in the presence of the conditioned exhaust gas, thereby obtaining a first CO₂-activated material, and recovering the first CO₂-activated material;
(vi) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(vii) producing low-carbon-footprint cement by mixing the first and/or second CO₂-activated material with the cement of step (iii), wherein mixing is performed
(a) by feeding the first and/or second CO₂-activated material to the second size-reduction apparatus of step (iii) while step (iii) is being performed; and/or
(b) by mixing the first and/or second CO₂-activated material with the cement obtained in step (iii) in a mixing apparatus different from the first, second and third size-reduction apparatus.

2. The method of claim 1 wherein the conditioned exhaust gas used in step (v) has
• a temperature within the range of 30-180°C, preferably within the range of 35-120 °C, most preferably within the range of 40-85 °C;
• a relative humidity of at least 40%, preferably at least 60%, more preferably at least 70%; and/or
• a CO₂ concentration within the range of 0.5-50 vol%, preferably 2-40 vol%, more preferably 5-35 vol%.

3. The method of claim 1 or 2 wherein the D90 of the first and/or second CO₂-activated material before the mixing of step (vii) is within the range of 0.5 to 120 µm, preferably within the range of 5 to 100 µm, more preferably within the range of 10-85 µm.

4. The method of any one of the previous claims wherein step (iv) comprises withdrawing exhaust gas at one or more locations corresponding to a preheater stage, a calcining stage, or a flue gas stack.

5. The method of any one of the previous claims wherein the exhaust gas withdrawn in step (iv) has a temperature of more than 200 °C, preferably more than 300 °C and wherein the conditioning of step (iv) comprises cooling the exhaust gas by at least 50 °C, preferably by at least 100 °C to provide the conditioned exhaust gas used in step (v).

6. The method of any one of the previous claims, wherein step (vi) is performed and wherein the CO₂-rich gas of step (vi) comprises at least part of the exhaust gas withdrawn in step (iv), wherein said exhaust gas may be used in step (vi) before or after said exhaust gas is used in step (v).

7. The method of claim 6 wherein the exhaust gas is used in step (vi) before it is used in step (v) such that the conditioning of step (iv) comprises using at least part of the exhaust gas in step (vi), thereby effecting a change of temperature, pressure, CO₂ concentration and/or humidity of the exhaust gas.

8. The method of any one of the previous claims wherein step (vi) is performed and wherein the moisture content of the first CO₂-activated material is increased before and/or during step (vi), preferably by spraying an aqueous composition such as water on the solid material.

9. The method of claim 8 further comprising a deagglomeration step which is applied during and/or after the moisture content of the first CO₂-activated material is increased, the deagglomeration step being applied before and/or during step (vi).

10. The method of any one of the previous claims, preferably of claim 8 or 9, wherein the conditioning of step (iv) comprises using at least part of the exhaust gas for drying the second CO₂-activated material before the second CO₂-activated material is mixed in step (vii).

11. The method of any one of the previous claims wherein the conditioning of step (iv) comprises using at least part of the exhaust gas for drying the activatable solid feedstock before the activatable solid feedstock is size-reduced in step (v).

12. The method of any one of the previous claims wherein step (vi) is performed and wherein recovering the second CO₂-activated material comprises a deagglomeration step.

13. The method of any one of claims 1-12 which comprises the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
(a) subjecting a first activatable solid feedstock to a size-reduction operation in a third size-reduction apparatus in the presence of the conditioned exhaust gas, thereby obtaining a first CO₂-activated material, and recovering the first CO₂-activated material; and
(b) subjecting a second activatable solid feedstock to a size-reduction operation in a fourth size-reduction apparatus in the presence of the conditioned exhaust gas, thereby obtaining a third CO₂-activated material, and recovering the third CO₂-activated material;
(vi)
(a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(vii) producing low-carbon-footprint cement by mixing
• the first and/or second CO₂-activated material;
• the third and/or fourth CO₂-activated material; and
• the cement of step (iii);
wherein mixing is performed
(a) by feeding the CO₂-activated materials to the second size-reduction apparatus of step (iii) while step (iii) is being performed; and/or
(b) by mixing the CO₂-activated materials with the cement obtained in step (iii) in a mixing apparatus different from the first, second, third and fourth size-reduction apparatus.

14. The method of claim 13 which comprises the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv)
(a) withdrawing at least part of the exhaust gas generated in step (ii) and conditioning it by modifying one or more of temperature, pressure, CO₂ concentration and humidity, thereby obtaining a first conditioned exhaust gas which has a temperature within the range of 30-300°C and comprises at least 0.5 vol% CO₂; and
(b) withdrawing at least part of the exhaust gas generated in step (ii) and/or part of the first conditioned exhaust gas and conditioning it by modifying one or more of temperature, pressure, CO₂ concentration and humidity, thereby obtaining a second conditioned exhaust gas which has a temperature within the range of 30-300°C and comprises at least 0.5 vol% CO₂;
(v)
(a) subjecting a first activatable solid feedstock to a size-reduction operation in a third size-reduction apparatus in the presence of the first conditioned exhaust gas, thereby obtaining a first CO₂-activated material, and recovering the first CO₂-activated material; and
(b) subjecting a second activatable solid feedstock to a size-reduction operation in a fourth size-reduction apparatus in the presence of the second conditioned exhaust gas, thereby obtaining a third CO₂-activated material, and recovering the third CO₂-activated material;
(vi)
(a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material; and
(b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(vii) producing low-carbon-footprint cement by mixing
• the first and/or second CO₂-activated material;
• the third and/or fourth CO₂-activated material; and
• the cement of step (iii);
wherein mixing is performed
(a) by feeding the CO₂-activated materials to the second size-reduction apparatus of step (iii) while step (iii) is being performed; and/or
(b) by mixing the CO₂-activated materials with the cement obtained in step (iii) in a mixing apparatus different from the first, second, third and fourth size-reduction apparatus.

15. The method of claim 13 or 14 wherein the first and second activatable feedstocks are different materials.

16. The method of any one of claims 1-13 which comprises the steps of:
(i) subjecting a cement raw material to a size-reduction operation in a first size-reduction apparatus, thereby obtaining cement raw meal;
(ii) subjecting the cement raw meal of step (i) to one or more pre-heating stages and to one or more calcining stages, thereby obtaining cement clinker and generating an exhaust gas comprising at least 0.5 vol% CO₂;
(iii) subjecting the cement clinker to a size-reduction operation in a second size-reduction apparatus, thereby obtaining cement;
(iv) withdrawing at least part of the exhaust gas generated in step (ii) and conditioning it by modifying one or more of temperature, pressure, CO₂ concentration and humidity, thereby obtaining a conditioned exhaust gas which has a temperature within the range of 30-300°C and comprises at least 0.5 vol% CO₂;
(v)
(a) subjecting a first activatable solid feedstock to a size-reduction operation in a third size-reduction apparatus in the presence of the conditioned exhaust gas, thereby obtaining a first CO₂-activated material, and recovering the first CO₂-activated material;
(b) subjecting a second activatable solid feedstock to a size-reduction operation in a fourth size-reduction apparatus in the presence of the conditioned exhaust gas, thereby obtaining a third CO₂-activated material, and recovering the third CO₂-activated material; and
(c) subjecting a third activatable solid feedstock to a size-reduction operation in a fifth size-reduction apparatus in the presence of the conditioned exhaust gas, thereby obtaining a fifth CO₂-activated material, and recovering the fifth CO₂-activated material;
(vi)
(a) optionally submitting the first CO₂-activated material to one or more further treatments where it is contacted with a CO₂-rich gas comprising at least 0.5 vol% CO₂ outside the third size-reduction apparatus, thereby obtaining a second CO₂-activated material, and recovering the second CO₂-activated material;
(b) optionally submitting the third CO₂-activated material to one or more further treatments where it is contacted with a CO₂-rich gas comprising at least 0.5 vol% CO₂ outside the third size-reduction apparatus, thereby obtaining a fourth CO₂-activated material, and recovering the fourth CO₂-activated material; and
(c) optionally submitting the fifth CO₂-activated material to one or more further treatments where it is contacted with a CO₂-rich gas comprising at least 0.5 vol% CO₂ outside the fifth size-reduction apparatus, thereby obtaining a sixth CO₂-activated material, and recovering the sixth CO₂-activated material; and
(vii) producing low-carbon-footprint cement by mixing
• the first and/or second CO₂-activated material;
• the third and/or fourth CO₂-activated material;
• the fifth and/or sixth CO₂-activated material; and
• the cement of step (iii);
wherein mixing is performed
(a) by feeding the CO₂-activated materials to the second size-reduction apparatus of step (iii) while step (iii) is being performed; and/or
(b) by mixing the CO₂-activated materials with the cement obtained in step (iii) in a mixing apparatus different from the first, second, third, fourth, fifth or sixth size-reduction apparatus.
